(19) **Europäisches Patentamt**

**European Patent Office**

**Office européen des brevets**

(11) Veröffentlichungsnummer: **0 308 756 B1**

(12) # EUROPÄISCHE PATENTSCHRIFT

(45) Veröffentlichungstag der Patentschrift: **15.07.92**

(21) Anmeldenummer: **88114851.4**

(22) Anmeldetag: **10.09.88**

Verbunden mit 88908194.9/0382749
(europäische
Anmeldenummer/Veröffentlichungsnummer)
durch Entscheidung vom 05.07.91.

(51) Int. Cl.⁵: **C08G 18/80**, C08G 18/62,
C08G 18/10, C09D 175/12

(54) **Überzugsmittel auf der Basis eines Acrylatcopolymerisats mit Hydroxyl-, Carboxyl- und tertiären Aminogruppen, Verfahren zur Herstellung des Überzugsmittels sowie seine Verwendung.**

(30) Priorität: **19.09.87 DE 3731652**

(43) Veröffentlichungstag der Anmeldung:
**29.03.89 Patentblatt 89/13**

(45) Bekanntmachung des Hinweises auf die
Patenterteilung:
**15.07.92 Patentblatt 92/29**

(84) Benannte Vertragsstaaten:
**AT BE CH DE ES FR GB IT LI LU NL SE**

(56) Entgegenhaltungen:
**DE-A- 1 956 960**
**FR-A- 2 301 575**
**FR-A- 2 406 647**

(73) Patentinhaber: **BASF Lacke + Farben Aktien-**
**gesellschaft**
**Max-Winkelmann-Strasse 80**
**W-4400 Münster(DE)**

(72) Erfinder: **Werner, Alfons Jung, Dr.**
**Uhrwerkerstrasse 65**
**W-4715 Ascheberg(DE)**
Erfinder: **Vorbeck, Udo**
**2350 Old Stone Court No. 7**
**Toledo Ohio 43614(US)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

EP 0 308 756 B1

**Beschreibung**

Die Erfindung betrifft Überzugsmittel, bestehend aus

A) einem Hydroxyl-, Carboxyl- und tertiäre Aminogruppen enthaltenden Acrylatharz als wesentlicher Bindemittelkomponente,

B) einem Polyisocyanat mit mindestens 2 Isocyanatgruppen pro Molekül als Vernetzungsmittel, wobei das Verhältnis der Isocyanatgruppen des Polyisocyanats zu den Hydroxylgruppen des Acrylatcopolymerisats im Bereich von 0,3 : 1 bis 3,5 : 1 liegt,

C) einem oder mehreren organischen Lösemitteln,

D) ggf. Pigmenten, Füllstoffen, üblichen Hilfsstoffen und Additiven,

E) ggf. einem Katalysator für die Vernetzung.

Überzugsmittel auf der Basis von hydroxylgruppenhaltigen Acrylatcopolymerisaten, die mit Polyisocyanaten gehärtet werden können und die Urethanbildung beschleunigende Gruppen enthalten, sind bekannt. Die EP-A-52 233 beschreibt ein Verfahren zur Herstellung von Acrylatcopolymerisaten durch Copolymerisation von Acryl- oder Methacrylsäureestern, Hydroxyalkylestern der Acryl- oder Methacrylsäure, Acryl- oder Methacrylsäure und ggf. Neutralmonomeren sowie die Kombination dieser Carboxylgruppen enthaltenden Polyacrylate mit geeigneten Vernetzungsmitteln. In den Beispielen werden Melamin-Formaldehyd-Kondensate als Vernetzungsmittel eingesetzt.

Aus der EP-B-39 797 sind Copolymerisate aus (Meth)-Acrylsäureestern, Monomeren mit mindestens einer Hydroxylgruppe, Monomeren mit mindestens einer tertiären Aminogruppe und ggf. anderen copolymerisierbaren Monomeren bekannt. Die mit Polyisocyanaten vernetzbaren Acrylatcopolymerisate werden in Haftklebern eingesetzt. Die beschriebenen Zusammensetzungen besitzen eine fast unbegrenzte Topfzeit.

Aus der EP-A-136 667 ist eine Überzugszusammensetzung bekannt, die ein hydroxylgruppenhaltiges Acrylatcopolymerisat enthält, welches in einem Anteil von 10 bis 40 Gew.-% Monomere mit tertiären Aminogruppen, bevorzugt N-Vinylpyrrolidon, einpolymerisiert enthält. Bis zu etwa 5 Gew.-% kann das Copolymerisat eingebaute carboxylgruppenhaltige Monomere enthalten. Die beschriebenen Überzugsmittel dienen zur Beschichtung von verchromten Flächen und schützen vor Abriß und Feuchtigkeit. Die mit Polyisocyanaten vernetzten Copolymerisate führen zu Überzügen mit guter Haftung auf Chrom, Chromlegierungen, Aluminium sowie Aluminiumlegierungen. Der relative hohe Anteil an Aminmonomeren ist notwendig für eine gute Haftung auf den genannten Metalloberflächen.

Die DE-OS 29 00 592 beschreibt hydroxylgruppenhaltige Acrylatcopolymerisate mit tertiären Aminogruppen und ggf. Carboxylgruppen. Die Herstellung dieser Polyacrylate erfolgt in einem 2-Stufen-Verfahren. Zunächst werden in einer ersten Stufe 3 bis 30 Gew.-% des Glycidylesters der Acrylsäure oder Methacrylsäure, 0 bis 20 Gew.-% eines Hydroxyalkylesters der Acryl- oder Methacrylsäure, 5 bis 60 Gew.-% Neutralmonomere, 5 bis 70 Gew.-% eines Acrylsäureesters oder Methacrylsäureesters und 0 bis 10 Gew.-% einer $\alpha,\beta$-monoolefinisch ungesättigten Mono- oder Dicarbonsäure radikalisch polymerisiert. In einer zweiten Stufe werden dann die Glycidylgruppen des Copolymerisats mit einem sekundäre Hydroxylgruppen enthaltenden sekundären Amin unter weitgehender Erhaltung der Hydroxylfunktion umgesetzt. Bei der Verwendung von Carboxylgruppen enthaltenden Monomeren besteht die Gefahr einer vorzeitigen Gelierung des Präpolymeren durch Reaktion der Carboxylgruppen mit den Epoxidgruppen des Glycidylesters der Acryl- bzw. Methacrylsäure. Werden Hydroxyalkylester der Acryl- oder Methacrylsäure eingesetzt, die eine primäre Hydroxylgruppe enthalten, besteht ebenfalls die Gefahr einer unerwünschten Nebenreaktion mit den vorhandenen Glycidylgruppen. Durch die fast ausschließlich vorhandenen sekundären Hydroxylgruppen ist die Reaktionsfähigkeit der Polyacrylate gegenüber als Vernetzungsmittel eingesetzten Polyisocyanaten derart eingeschränkt, daß Topfzeiten der Polyol-Polyisocyanatsysteme von mindestens 15 Stunden erzielt werden. Außerdem erfordert das Vorliegen fas ausschließlich sekundärer Hydroxylgruppen im Acrylatcopolymerisat relativ hohe Temperaturen bei der nachfolgenden Vernetzung mit Polyisocyanaten. Es treten weiterhin Probleme bezüglich ausreichender Säurestabilität und bezüglich einer Vergilbungsneigung des Lackfilms durch den relativ hohen Gehalt an Aminogruppen auf.

Aus der DE-OS 28 36 830 ist ein Verfahren zur Herstellung von Bindemitteln für die kathodische Elektrotauchlackierung bekannt, bei dem ein hydroxylgruppenhaltiges Polymerisat (P) mit (PA) Verbindungen, die mindestens eine tertiäre Aminogruppe und durchschnittlich 0,8 bis 1,5 freie Isocyanatgruppen pro Molekül enthalten, sowie ggf. mit (PO) Verbindungen, die pro Molekül 0,8 bis 1,5 freie Isocyanatgruppen und 1 bis 3 olefinische Doppelbindungen enthalten, umgesetzt wird. Bedingt durch die Verwendung der Bindemittel für kathodisch abscheidbare Überzugsmittel auf Wasserbasis, weisen die Polymerisationsharze eine hohe Aminzahl auf, da die tertiären Aminogruppen für die Wasserlöslichkeit/Wasserdispergierbarkeit der Harze benötigt werden. Die Säurezahl der Acrylatharze ist dagegen äußerst gering, da Carboxylgruppen die kathodische Abscheidung der Überzugsmittel stören. Die Härtung der Bindemittel erfolgt in der DE-OS 28 36 830 thermisch, ggf. unterstützt durch Zugabe der obengenannten Komponente (PO) oder durch Zugabe von Harnstoff-, Melamin-bzw. Phenol-Formaldehydkondensaten und nicht wie in der vorliegenden Anmeldung durch zugesetztes Polyisocyanat.

Die JP-A 79 61 234 beschreibt mit Polyisocyanaten härtbare hydroxylgruppenhaltige Bindemittel, die durch Umsetzung von hydroxylgruppenhaltigen Vinylkomponenten mit ungesättigten Carbonsäuren, basische Stickstoffatome enthaltenden Vinylkomponenten, anderen Comonomeren und einem Katalysator erhalten werden. Diese Bindemittel sind aber aufgrund von Vergilbungsproblemen nicht für Klar- und Decklacke einsetzbar. Weiterhin ungünstig im Hinblick auf die Lösemittelbelastung der Umgebung beim Trocken der Lackfilme ist die hohe Viskosität der Bindemittellösungen, z.B. von 30 dPas bei einem Festkörpergehalt von nur 45 % in dem Beispiel, das in der Zusammenfassung 142199 z des Chemical Abstracts, Band 91, Nr. 18, 29. Oktober 1979, Seite 70, aufgeführt ist.

Die Aufgabe der vorliegenden Erfindung bestand darin, Überzugsmittel auf der Basis hydroxylgruppenhaltiger Acrylate und auf der Basis von Polyisocyanaten zu schaffen, welche - ausgehend von Lackmischungen - eine genügend lange und insbesondere leicht steuerbare Topfzeit haben sollten und welche bei niedrigen Temperaturen auch ohne Katalysatorzugabe schnell aushärten sollten. Die Verwendung dieser Überzugsmittel als Klar- und Decklack sollte insbesondere zu nicht vergilbenden Filmen führen, die gleichzeitig eine hohe Flexibilität, Kratzfestigkeit sowie Witterungs-, Lösemittel-und Säurebeständigkeit aufweisen. Des weiteren sollte der Festkörpergehalt der Lacklösung bei einer für die Verarbeitung günstigen Viskositat möglichst hoch sein, um die Lösemittelbelastung der Umgebung beim Trocknen der Lackfilme möglichst niedrig zu halten. Schließlich sollte das Überzugsmittel aus möglichst vielen verschiedenen, leicht verfügbaren Rohstoffen hergestellt werden können, um eine möglichst große Anwendungsbreite der Überzugsmittel zu erzielen.

Aus der US-PS 4,339,365 ist ein Dispergierharz bekannt, welches aus einem Acrylatcopolymerisat mit Carboxylgruppen, Hydroxylgruppen und tertiären Aminogruppen besteht. Das Acrylatcopolymerisat ist beispielsweise herstellbar durch Copolymerisation von 20 bis 85 Gew.-% Alkylmethacrylaten mit 3 bis 8 Kohlenstoffatomen im Alkylrest, 5 bis 60 Gew.-% härtenden Monomeren, wie z. B. Styrol, Methylmethacrylat oder Ethylmethacrylat, 1 bis 25 Gew.-% ethylenisch ungesättigten Carbonsäuren, 1 bis 25 Gew.-% Hydroxyalkylacrylaten oder -methacrylaten und 0,1 bis 15 Gew.-% Acrylat- bzw. Methacrylatmonomeren mit tertiären Aminogruppen. Das Harz dient zur Dispergierung von Pigmenten und wird zusammen mit einem filmbildenen Hauptbindemittel, Pigmenten und Lösungsmitteln zu einer Überzugszusammensetzung verarbeitet. Diese enthält etwa 25 Gew.-% bis etwa 98 Gew.-% Hauptbindemittel, etwa 1 bis etwa 70 Gew.-% Pigmente und etwa 1 bis etwa 50 Gew.-% des beschriebenen Dispergierharzes, welches die Pigmente in einer Trägerflüssigkeit und im Hauptbindemittel dispergiert.

Die Aufgabe der vorliegenden Erfindung wird gelöst durch ein Überzugsmittel, bestehend aus

A) einem Hydroxyl-, Carboxyl- und tertiäre Aminogruppen enthaltenden Acrylatharz als wesentlicher Bindemittelkomponente,

B) einem Polyisocyanat mit mindestens 2 Isocyanatgruppen pro Molekül als Vernetzungsmittel, wobei das Verhältnis der Isocyanatgruppen des Polyisocyanates zu den Hydroxylgruppen des Acrylatcopolymerisates im Bereich von 0,3 : 1 bis 3,5 : 1 liegt,

C) einem oder mehreren organischen Lösemitteln,

D) ggf. Pigmenten, Füllstoffen, üblichen Hilfsstoffen und Additiven,

E) ggf. einem Katalysator für die Vernetzung,

dadurch gekennzeichnet, daß das Acrylatharz A) dadurch hergestellt wird, daß

I. ein hydroxylgruppenhaltiges Acrylatcopolymerisat (F) mit einer Säurezahl von 5 bis 30 mg KOH/g durch Copolymerisation von

a) mindestens 10 Gew.-% Hydroxyalkylestern $\alpha$, $\beta$-ungesättigter Carbonsäuren und/oder einem Umsetzungsprodukt aus Acrylsäure und/oder Methacrylsäure mit dem Glycidylester einer Carbonsäure mit einem tertiären $\alpha$-Kohlenstoffatom,

b) 0,1 bis 8 Gew.-% ethylenisch ungesättigten Carbonsäuren und

c) mindestens 60 Gew.-% weiteren Monomeren mit einer polymerisierbaren, olefinisch ungesättigten Doppelbindung

in einem organischen Lösungmittel unter Zusatz von Polymerisationsinitiatoren aufgebaut wird, wobei die Summe von a), b) und c) 100 Gew.-% beträgt, und daß

II. das hydroxylgruppenhaltige Acrylatcopolymerisat (F) mit Verbindungen (G) umgesetzt wird, die pro Molekül durchschnittlich 0,8 bis 1,5 freie Isocyanatgruppen und mindestens 1 tertiäre Aminogruppe enthalten, wobei die Menge dieser Verbindungen (G) so gewählt wird, daß das entstehende Acrylatharz (A) eine Aminzahl von 1 bis 10 mg KOH/g aufweist und wobei das Acrylatharz A) mittlere Molekulargewichte ($\overline{M}_n$) von 1000 bis 10000 aufweist. Bevorzugte Ausführungsformen ergeben sich aus den Unteransprüchen.

Als Komponente I.a) kommen Hydroxyalkylester $\alpha$, $\beta$-ungesättigter Carbonsäuren mit primären oder sekundären Hydroxylgruppen in Frage. Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hydroxylgruppen und Hydroxyalkylestern mit sekundären Hydroxylgruppen verwendet werden. Beispiele für geeignete Hydroxyalkylester $\alpha$,$\beta$-ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate.

Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die Komponente I.a) zumindest teilweise ein Umsetzungsprodukt aus einem Mol Hydroxyethylacrylat und/oder Hydroxyethylmethacrylat und durchschnittlich zwei Mol $\epsilon$-Caprolacton sein.

Bevorzugt ist es, wenn als Komponente I.a) zumindest teilweise ein Umsetzungsprodukt aus Acrylsäure und/oder Methacrylsäure mit dem Glycidylester einer Carbonsäure mit einem tertiären $\alpha$-Kohlenstoffatom eingesetzt wird. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären $\alpha$-Kohlenstoffatom kann vor, während oder nach der Polymerisationsreaktion erfolgen. Es ist darauf zu achten, daß die Säurezahl des fertigen Polyacrylats im Bereich von 5 bis 30 mg KOH/g liegt.

Als Komponente I.b) werden beispielsweise Acrylsäure, Methacrylsäure, Itaconsäure, Crotonsäure und Halbester der Malein- und Fumarsäure sowie deren Mischungen eingesetzt.

Geeignete weitere Monomere mit einer polymerisierbaren, olefinisch ungesättigten Doppelbindung (Komponente I.c)) sind Styrol, Vinyltoluol, Alkylester der Acryl- und Methylacrylsäure, Alkoxyethylacrylate und Aryloxyethylacrylate und die entsprechenden Methacrylate sowie Ester der Malein-und Fumarsäure. Genannt seien als Beispiele Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5,-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5,-Trimethylhexylmethacrylat, Decylmethacrylat, Dodecylmethacrylat, Hexadecylmethacrylat, Octadecylmethacrylat, Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen.

Die zur Einführung der tertiären Aminogruppe in das Acrylatcopolymerisat (F) verwendeten Verbindungen (G) werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ einen Alkanol-oder Hydroxyphenylrest bedeutet und $R_2$ bzw. $R_3$ Alkyl- oder Cycloalkylreste darstellen können. Bevorzugt sind Dialkylalkanolamine wie z.B. Dimethylethanolamin, Diethylethanolamin sowie deren höhere Homologe bzw. Isomere.

Als Di- oder Polyisocyanate sind beispielsweise geeignet: Aromatische Isocyanate wie z.B. 2,4-, 2,6-Toluylendiisocyanat und deren Gemische, 4,4$'$-Diphenylmethandiisocyanat, m-Phenylen-, p-Phenylen-, 4,4$'$-Diphenyl-, 1,5-Naphthalin-, 1,4-Naphthalin-, 4,4$'$-Toluidin-, Xylylendiisocyanat sowie substituierte aromatische Systeme wie z.B. Dianisidindiisocyanate, 4,4$'$-Diphenyletherdiisocyanate oder Chlorodiphenylendiisocyanate und höherfunktionelle aromatische Isocyanate wie z.B. 1,3,5-Triisocyanatobenzol, 4,4$'$-4$''$-Triisocyanattriphenylmethan, 2,4,6-Triisocyanatotoluol und 4,4$'$-Diphenyldimethylmethan-2,2$'$,5,5$'$-tetraisocyanat; cycloaliphatische Isocyanate wie z.B. 1,3-Cyclopentan-, 1,4-Cyclohexan-, 1,2-Cyclohexan- und Isophorondiisocyanat; aliphatische Isocyanate wie z.B. Trimethylen-, Tetramethylen-, Pentamethylen-, Hexamethylen-, Trimethylhexamethylen-1,6-diisocyanat und Tris-hexamethylen-triisocyanat.

Vorzugsweise werden Diisocyanate mit unterschiedlich reaktiven Isocyanatgruppen eingesetzt, wie z.B. Isophorondiisocyanat.

Die Umsetzung zwischen dem Amin und dem Isocyanat erfolgt bei Temperaturen von 0 bis 80°C, vorzugsweise von 20 bis 50°C. Die Mengenverhältnisse der Reaktionspartner werden so gewählt, daß die gebildete Verbindung (G) 0,8 bis 1,5, vorzugsweise 1, freie Isocyanatgruppe enthält.

Die für die Vernetzung der Acrylatharze A) verwendeten Polyisocyanate (Komponente B)) sind dieselben Polyisocyanate, die auch zur Herstellung der Verbindung (G) eingesetzt werden. Für geeignete Beispiele sei daher auf die Beschreibung der Verbindung (G) verwiesen. Weiterhin können aber die Polyisocyanate auch zu Präpolymeren mit höherer Molmasse verknüpft sein. Zu nennen sind hierbei Addukte aus Toluylendiisocyanat und Trimethylolpropan, ein aus 3 Molekülen Hexamethylendiisocyanat gebildetes Biuret sowie die Trimeren des Hexymethylendiisocyanats und des 3,5,5-Trimethyl-1-isocyanato-3-isocyanatomethylcyclohexans.

Die Menge des eingesetzten Vernetzers wird so gewählt, daß das Verhältnis der Isocyanatgruppen der Komponente B) zu den Hydroxylgruppen der Komponente A) im Bereich von 0,3:1 bis 3,5:1 liegt.

Da die in das Acrylatcopolymerisat eingebauten Amino- und Carboxylgruppen die Polyurethanbildung katalysieren, kann häufig auf die Verwendung eines externen Katalysators verzichtet werden.

Wird aber ein Vernetzungskatalysator z.B. bei einem sehr geringen Gehalt an Amino- und Carboxylgruppen zugesetzt, so werden bevorzugt Amine, wie z.B. Dimethylethanolamin, eingesetzt. Weitere geeignete Katalysatoren sind Zinn-und Zink-organische Verbindungen sowie andere Schwermetallbeschleuniger. Die zugesetzte Katalysatormenge beträgt 0,01 bis 1 Gew-%, bezogen auf den Festkörpergehalt der reagierenden Komponenten.

Die erfindungsgemäßen Überzugsmittel können bei niedrigen Temperaturen, und zwar bis etwa 100°C, gehärtet werden. Sie können aus der Polyurethanlacktechnologie übliche Hilfsstoffe und Zusatzstoffe enthalten, wie z.B. Verlaufsmittel auf Celluloseesterbasis, Oligoalkylacrylate, Silikonöle, Weichmacher, wie Phosphorsäureester, Phthalsäureester, Pigmente und Füllstoffe, viskositätskontrollierende Zusätze, Mattierungsmittel, UV-Absorber und Lichtschutzmittel.

Zur Verlängerung der Topfzeit können bis zu 15 Gew.-%, bezogen auf das Gesamtgewicht der Überzugszusammensetzung, eines oder mehrerer tertiärer Monoalkohole verwendet werden. Als Beispiele für geeignete topfzeitverlängernde Alkohole seien t-Butanol und 1-Methoxy-2-methyl-propan-2-ol genannt. Je nach Verwendungszweck kann die Topfzeit der erfindungsgemäßen Überzugsmittel gesteuert werden. Sie ist abhängig von der Aminzahl, da Aminogruppen Urethanbildung katalysieren, von der Höhe der Hydroxylzahl und von der Art der vorhandenen, vernetzungsfähigen Hydroxylgruppen. Die Topfzeit der erfindungsgemäßen Zusammensetzungen ist abhängig von der Säurezahl, da die Urethanbildung durch Säuregruppen beschleunigt wird und natürlich von der Menge an zugesetztem topfzeitverlängernden tertiären Alkohol. Dabei zeigte sich, daß gerade die Kombination von tertiären Aminogruppen und Säuregruppen zu günstigen Topfzeiten, relativ niedrigen Härtungstemperaturen und relativ kurzen Härtungszeiten führt und die Eigenschaften der resultierenden Filme in bezug auf Benzinfestigkeit, Vergilbungsresistenz, Lösungsmittelbeständigkeit, Säurebeständigkeit und Witterungsbeständigkeit günstig beeinflußt.

Die erfindungsgemäßen Überzugsmittel können ggf. auch geringe Anteile anderer mit Polyisocyanaten vernetzbarer Bindemittel enthalten.

Die Erfindung betrifft auch Verfahren zur Herstellung der erfindungsgemäßen Überzugsmittel, bei denen das Acrylatharz A) dadurch hergestellt wird, daß

I. ein hydroxylgruppenhaltiges Acrylatcopolymerisat (F) mit einer Säurezahl von 5 bis 30 mg KOH/g durch Copolymerisation von

a) mindestens 10 Gew.-% Hydroxyalkylestern $\alpha,\beta$-ungesättigter Carbonsäuren und/oder einem Umsetzungsprodukt aus Acrylsäure und/oder Methacrylsäure mit dem Glycidylester einer Carbonsäure mit einem tertiären $\alpha$-Kohlenstoffatom oder anstelle des Umsetzungsproduktes aus Acryl- und/oder Methacrylsäure mit dem Glycidylester einer äquivalenten Menge Acryl- und/oder Methacrylsäure, wobei die Acryl- und/oder Methacrylsäure in diesem Fall während oder nach der Polymerisationsreaktion mit dem Glycidylester einer Carbonsäure mit einem tertiären $\alpha$-Kohlenstoffatom umgesetzt wird,
b) 0,1 bis 8 Gew.-% ethylenisch ungesättigten Carbonsäuren und
c) mindestens 60 Gew.-% weiteren Monomeren mit einer polymerisierbaren, oelfinisch ungesättigten Doppelbindung

in einem organischen Lösemittel unter Zusatz von Polymerisationsinitiatoren aufgebaut wird, wobei die Summe von a), b) und c) 100 Gew.-% beträgt, und daß

II. das hydroxylgruppenhaltige Acrylatcopolymerisat (F) mit Verbindungen (G) umgesetzt wird, die pro Molekül durchschnittlich 0,8 bis 1,5, vorzugsweise 1, freie Isocyanatgruppe und mindestens 1 tertiäre Aminogruppe enthalten, wobei die Menge dieser Verbindungen (G) so gewählt wird, daß das entstehende Acrylatharz A) eine Aminzahl von 1 bis 10 mg KOH/g, bevorzugt 1 bis 5 mg KOH/g, aufweist.

Dieses Acrylatharz A) wird mit einem Polyisocyanat B) mit mindestens 2 Isocyanatgruppen pro Molekül, organischem Lösungsmittel, ggf. Pigmenten, Füllstoffen und üblichen Hilfsstoffen und Additiven sowie ggf. mit einem Katalysator für die Vernetzung durch Mischen und ggf. durch Dispergieren zu einer Überzugsmasse verarbeitet mit der Maßgabe, daß das Verhältnis der Isocyanatgruppen von B) zu den Hydroxylgruppen von A) im Bereich von 0,3:1 bis 3,5:1 liegt.

Die Polymerisationsreaktion zur Herstellung der Komponente (F) wird nach den allgemein üblichen Verfahren für Polymerisationen durchgeführt. Das als Polymerisationsmedium dienende Lösungsmittel kann beispielsweise ausgewählt sein aus der Gruppe Toluol, Xylol, Chlorbenzol, Butylacetat, Ethylacetat, Ethylglykolacetat, Pentylacetat, Tetrahydrofuran, Dioxan, Aceton und Methylethylketon. Die Copolymerisationstemperatur richtet sich nach der Auswahl des Polymerisationsinitiators.

Geeignete Initiatoren sind Peroxidverbindungen, wie z.B. Di-benzoylperoxid, Dicumylperoxid, Cumolhydroperoxid, Di-tert.-butylperoxid, tert.-Butylhydroperoxid, 2,2-Di-tert.-butylperoxybutan, tert.-Amylperbenzoat, 1,3-Bis-(tert.-butylperoxyisopropyl)-benzol, Diisopropylbenzolmonohydroperoxid und Diacylperoxide, wie z.B. Diacetylperoxid, Peroxyketale, wie z.B. 2,2-Di-(tert.-amylperoxy)-propan und Ethyl-3,3,-di-(tert.-amylperoxy)-butyrat; aliphatische Azoverbindungen, wie beispielsweise Azobisisobutyronitril und Azobiscyclohexannitril oder thermolabile hochsubstiuierte Ethanderivate, beispielsweise auf Basis Benzpinakol und auf Basis silylsubstituierter Ethanderivate.

Die Menge der einzelnen Komponenten a), b), c) wird so gewählt, daß ein Acrylatcopolymerisat mit einer Säurezahl von 5 bis 30 mg KOH/g, bevorzugt 8 bis 25 mg KOH/g, entsteht.

In das im ersten Schritt des erfindungsgemäßen Verfahrens in einfacher Weise aus einem breiten Rohstoffangebot aufgebaute, hydroxyl- und carboxylgruppenhaltige Acrylatcopolymerisat (F) werden im zweiten Schritt des erfindungsgemäßen Verfahrens tertiäre Aminogruppen durch Umsetzen mit Verbindungen (G) eingeführt. Dazu wird das Acrylatcopolymerisat (F) in einem isocyanatinerten Lösungsmittel wie z.B. Ethylenglykolmonoethyletheracetat, Xylol, Toluol, Chlorbenzol, höher substituierte Aromaten, wie z.B. Solvent Naphta®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie Ester wie z.B. Butylacetat, Pentylacetat, Hexylacetat und Methoxypropylacetat gelöst und mit der Verbindung (G) bei 10 bis 100°C, vorzugsweise 50 bis 80°C, ggf. in Anwesenheit von organischen Zinnverbindungen als Katalysatoren, bis zu einem NCO-Wert von praktisch Null umgesetzt. Die Menge der Verbindung (G) wird dabei so gewählt, daß das entstehende Acrylatharz (A) eine Aminzahl von 1 bis 10 mg KOH/g, bevorzugt 1 bis 5 mg KOH/g, aufweist.

Die Acrylatcopolymerisate(A) haben mittlere Molekulargewichte ($\overline{M}_n$) von 1000 bis 10000, und ihre Lösungen in Estern besitzen bei 23°C bevorzugt eine Viskosität von 0,5 bis 10 dPas bei einer Konzentration von 50 Gew.-%.

Vorteilhafte Ausgestaltungen des erfindungsgemäßen Verfahrens sind bereits bei der Beschreibung der Überzugsmittel aufgeführt.

Die Erfindung betrifft auch ein Verfahren zur Herstellung eines Überzuges, bei dem das zuvor beschriebene, erfindungsgemäße Überzugsmittel durch Spritzen, Fluten, Tauchen, Walzen, Rakeln oder Streichen auf ein Substrat in Form eines Films aufgebracht wird und der Film bei Temperaturen bis etwa 100°C zu einem festhaftenden Überzug gehärtet wird. Die efindungsgemäßen Überzugsmittel können nach allen beliebigen Methoden der Lacktechnologie auf ein Substrat in Form eines Films aufgebracht werden. Die erfindungsgemäßen Überzugsmittel haben günstige Topfzeiten, die - wie bereits erläutert - je nach Anwendungszweck leicht verkürzt oder verlängert werden können. Die Zusammensetzungen sind bei niedriger Temperatur und kurzen Härtungszeiten aushärtbar. Die resultierenden Filme sind benzinfest, flexibel, kratzfest, witterungsbeständig, sehr gut lösungsmittel- und säurebeständig. Insbesondere weisen sie keine Vergilbungsneigung auf.

Da die beschriebenen Überzugsmittel bei niedrigen Temperaturen aushärten, sind sie besonders gut geeignet für die Verwendung als Autoreparaturlacke.

Die Zusammensetzungen sind weiterhin besonders gut geeignet für die Verwendung als Klarlack oder pigmentierter Decklack, da sie keine Vergilbungsneigung aufweisen. Besonders geeignet sind die erfindungsgemäßen Überzugsmittel für die Verwendung zur Formulierung von Klarlacken auf einem Basislack für metallpigmentierte Zweischichtlackierungen nach dem Naß-in-Naß-Verfahren ("2-Coat-1-Bake-Verfahren).

Im folgenden wird die Erfindung anhand von Ausführungsbeispielen näher erläutert. Teile bedeuten Gewichtsteile, sofern nichts anderes angegeben wird.

Die erfindungsgemäßen Überzugsmittel führen zu Überzügen mit verbesserten Ergebnissen bezüglich der Pendelhärte und der Lösungsmittelbeständigkeit. Dies geht hervor aus Vergleichsversuchen mit Überzugsmitteln auf der Basis von Acrylatharzen, welche nur Hydroxylgruppen und Carboxylgruppen oder Hydroxylgruppen und tertiäre Aminogruppen als funktionelle Gruppen enthalten. Weiterhin weisen die mit den erfindungsgemäßen Überzugsmitteln hergestellten, getrockneten Lackfilme sehr niedrige Farbwerte auf.

Herstellung der Acrylatharzlösungen I, II und III

In einem 4 l-Edelstahlkessel werden vorgelegt:

| Acrylatharzlösung | I | II | III |
|---|---|---|---|
| Xylol | 326,65 T. | 326,65 T. | 326,65 T. |
| 1-Methoxypropylacetat-2 | 326,65 T. | 326,65 T. | 326,65 T. |
| Gylcidylester einer C-10-Fettsäure | 200 T. | 190 T. | 190 T. |

Die Mischungen werden auf 140°C aufgeheizt, anschließend werden aus dem Monomerentank innerhalb von 3 h folgende Komponenten gleichmäßig zudosiert:

| Acrylatharzlösung | I | II | III |
|---|---|---|---|
| Tert.-Butylacrylat | 200 T. | 200 T. | 200 T. |
| Styrol | 150 T. | 150 T. | 150 T. |
| Hydroxypropylacrylat | 130 T. | 130 T. | 130 T. |
| Butandiolmonoacrylat | 120 T. | 120 T. | 120 T. |
| Methylmethacrylat | 140 T. | 140 T. | 140 T. |
| Acrylsäure | 60 T. | 70 T. | 70 T. |
| Mercaptoethanol | 10 T. | 10 T. | 10 T. |

Aus dem Initiatortank werden innerhalb von 3,5 h gleichmäßig folgende Komponenten zudosiert:

| Acrylatharzlösung | I | II | III |
|---|---|---|---|
| Xylol | 12 | 12 | 12 |
| 1-Methoxypropylacetat-2 | 12 | 12 | 12 |
| Dicumylperoxid | 6 | 6 | 6 |

Mit dem Start beider Zuläufe (Monomer und Initiator) wird gleichzeitig begonnen, während der Polymerisation wird die Temperatur im Kessel auf 140°C gehalten. Anschließend wird noch 3 h nachpolymerisiert. Bei Acrylatharzlösung I und III wird danach bei 80°C eine Lösung eines Monoisocyanats mit einer tert. Aminogruppe (1:1 Adduct aus Isophorondiisocyanat und Dimethylethanolamin, 50%ig in Xylol) an das OH-Acrylat addiert. Die Reaktionslösung wird so lange auf Temperatur gehalten, bis der NCO-Wert = 0 ist. Bei Acrylatharzlösung I wird dann noch zur Erniedrigung der Säurezahl 25 g des Glycidylesters einer C-10-Alkancarbonsäure addiert.

Die erhaltenen Acrylatharzlösungen haben folgende Werte:

| Acrylatharzlösung | I | II | III |
|---|---|---|---|
| Festkörper (1h/130°C) | 59,6 % | 60,8 % | 60,1 % |
| Visk. (50%ig, dPas) | 1,95 | 1,90 | 2,80 |
| Säurezahl | 2,0 | 17,6 | 16,1 |
| Aminzahl | 3,5 | 0 | 3,5 |

Harzlösung I ist demnach ein OH-Polyacrylat mit Aminogruppen und sehr niedriger Säurezahl, Harzlösung II ist ein OH-Polyacrylat mit Carboxylgruppen, jedoch ohne Aminogruppen, und Harzlösung III ist ein erfindungsgemäßes OH-Polyacrylat mit Carboxyl- und Aminogruppen.

Rezeptur der Isocyanatvernetzerlösung

Die Vernetzerlösung ist eine 75%ige Lösung eines trifunktionellen aliphatischen Polyisocyanats mit Biuretstruktur auf der Basis von Hexamethylendiisocyanat, gelöst in 1-Methoxypropylacetat-2/Xylol 1:1 (Handelsname der Vernetzerlösung: ®Desmodur N75 der Firma Bayer AG).

Prüfung der Überzugsmittel auf Basis der Acrylatharzlösungen I, II und III und der Polyisocyanathärterkomponente

Die Acrylatharzlösungen I, II, III werden mit der Härterlösung derart gemischt, daß das Vernetzungsverhältnis der OH-Gruppen zu den NCO-Gruppen jeweils 1:1 beträgt. Durch Verdünnen der Lackmischungen mit Butylacetat wird eine Auslaufzeit im DIN 4-Becher von ca. 20 s eingestellt.

Die erhaltenen Klarlacklösungen wurden als Filme mit einer Naßfilmstärke von 200 μm auf Glastafeln aufgerakelt und dann 2 bzw. 4 Tage bei Raumtemperatur (RT) getrocknet. Anschließend erfolgte die Bestimmung der Pendelhärte nach König. Die Lösemittelbeständigkeit der getrockneten Lackfilme wurde bestimmt, indem ein mit Superbenzin getränktes Filzplättchen 5 min abgedeckt auf dem Film belassen wurde. Danach wurde auf Markierung und Erweichung geprüft. Die Ergebnisse dieser Prüfungen sind in der folgenden Tabelle zusammengefaßt:

| Klarlack mit Harz Nr. | I | II | III |
|---|---|---|---|
| Pendelhärte (nach König) (s) | | | |
| – nach 2 Tagen bei RT | 21 | 80,5 | 103 |
| – nach 4 Tagen bei RT | 29 | 112 | 134 |
| Benzintest | | | |
| – nach 4 Tagen bei RT | Markierung | leichte Markierung | keine Markierung |
| | bei allen Tafeln keine Erweichung | | |

In einem zweiten Versuch wurden die oben beschriebenen Klarlacklösungen wiederum mit einer Naßfilmstärke von 200 μm auf Glastafeln aufgerakelt. Im Unterschied zum vorherigen Versuch erfolgte jetzt die Härtung der Lackfilme bei 60°C während einer Zeit von 30 min. Danach wurden die Lackfilme 24 bzw. 48 h bei Raumtemperatur (RT) weiter getrocknet, bevor die Bestimmung der Pendelhärte nach König erfolgte.

Für den oben beschriebenen Benzintest wurden die Filme im Anschluß an die Vernetzung bei 60°C 4 Tage bei Raumtemperatur getrocknet.

Eine Zusammenfassung der Prüfergebnisse zeigt die folgende Tabelle.

| Klarlack mit Harz | I | II | III |
|---|---|---|---|
| Pendelhärte (nach König) (s) | | | |
| 24 h nach Vernetzung bei 60°C | 55 | 87 | 130 |
| 48 h nach Vernetzung bei 60°C | 63 | 149 | 165 |
| Benzintest | | | |
| 4 Tage nach Vernetzung bei 60°C | leichte Merkierung | leichte Markierung | keine Markierung |
| | bei allen Tafeln keine Erweichung | | |

Auf Basis von Acrylatharzlösung III wurde ein Klarlack auf Basislack appliziert und getrocknet.

Es wurde ein handelsüblicher Silber-metallic Basislack mit den Bindemittelkomponenten Celluloseacetobutyrat/Polyester/Melaminharz verwendet. Dieser wurde auf gefülltes Bonderblech appliziert.

Klarlackrezeptur:

Stammlack:

| 80 Teile | Acrylatharzlösung III |
|----------|----------------------|
| 7,27 Teile | Xylol |
| 7,9 Teile | Butylacetat |
| 1,6 Teile | Butylglykolacetat |
| 0,8 Teile | Dipentene |
| 1,0 Teile | handelsüblicher UV-Absorber (Oxalanilid) |
| 1,2 Teile | handelsübliches Lichtschutzmittel (gehindertes Amin) |
| 0,23 Teile | handelsübliches Silikonöl |

Vernetzerlösung:

| 40,5 Teile | trifunktionelles Polyisocyanat (Basis trimerisiertes Hexamethylendiisocyanat) |
|-----------|---------|
| 16,5 Teile | Butylglykolacetat |
| 4,9 Teile | C3-C4-Alkylsubst. Aromatengemisch |
| 29,5 Teile | Butylacetat |
| 2,1 Teile | Xylol |

Stammlack und Vernetzerlösung werden im Volumenverhältnis 2:1 gemischt und mit Verdünnung auf 16 s (DIN-4 Auslauf-becher) eingestellt.

Verdünnung:

| 15 Teile | Xylol |
|----------|-------|
| 13 Teile | C3-C4-Alkylaromatengemisch |
| 10 Teile | Benzin 21 |
| 50 Teile | Butylacetat |
| 5 Teile | Methoxypropylacetat A |
| 3 Teile | Butylglykolacetat |
| 2 Teile | Butoxyl |
| 2 Teile | Dipentene |

Der Klarlack wird auf den oben bezeichneten Basislack aufgespritzt und 30 min bei 60°C getrocknet. Die Filmstärke des Klarlacks betrug 90 $\mu$m. Es wurde ein Glanzgrad (60°) von 97 % gemessen. Der DOI-Wert lag bei 95.

Die Klarlacktafel wurde in einem Weather-o-Meter mit Kantenfilter A künstlich bewittert (VDA-Prüfblatt 621-4, Prüfung nach Punkt 3.2). Eine erste Rißbildung des Klarlacks trat erst nach über 4000 h auf. Von der Mischung Stammlack/Härterlösung wurde die Topfzeit bestimmt. Nach 5 h war die Viskosität von 16 s auf 29 s (DIN-4 Auslaufbecher) angestiegen.

Die Lackmischung wurde auf Glastafeln aufgerakelt und bei einer Trockenfilmstärke von 20 $\mu$m die Pendelhärte nach König bestimmt.

| Trocknung 24 h Raumtemperatur | 113 s |
|---|---|
| Trocknung 30 min bei 60°C + 20 h Raumtemperatur | 231 s |
| Trocknung 20 min bei 80°C + 2 h Raumtemperatur | 162 s |

Von der Acrylatharzlösung III wurde die Farbzahl nach Gardner bestimmt; es wurde ein Wert von 1 erreicht.

Von einem ähnlichen Acrylatharz, bei dem 1 % Dimethylaminoethylmethacrylat in das Acrylatcopolymerisat (F) in der 1. Stufe unter Verwendung von Dicumylperoxid als Initiator mit einpolymerisiert wurde und bei dem das Acrylatcopolymerisat (F) nicht noch mit einer Isocyanatverbindung (G) umgesetzt wurde, wurde ebenfalls die Farbzahl nach Gardner bestimmt. Es wurde ein Wert von 11 gemessen (Acrylatharz mit Hydroxypropylmethacrylat/Methylmethacrylat/n-Butylmethacrylat/n-Butylacrylat/tert.-Butylacrylat/Ethylhexylacrylat/Vinylpyrrolidon).

In einem weiteren Vergleichsversuch wurde ein Acrylatharz aufgebaut, bei dem in der ersten Stufe zur Herstellung des Acrylatcopolymerisats bis auf das Hydroxypropylacrylat, das durch Hydroxyethylmethacrylat ersetzt wurde, dieselben Monomeren wie bei dem Acrylatharz III eingesetzt wurden. Zur Einführung der Aminogruppen in das Acrylatharz wurde in der ersten Stufe zusätzlich 1 % Dimethylaminoethylmethacrylat mit einpolymerisiert, statt in einer zweiten Stufe das Acrylatcopolymerisat mit einer Verbindung (G) umzusetzen. Als Initiator wurde Azobis-(2-methylbutannitril) eingesetzt. Die Farbzahl nach Gardner dieses Acrylatharzes beträgt 4.

**Patentansprüche**

1. Überzugsmittel, bestehend aus
   A) einem Hydroxyl-, Carboxyl- und tertiäre Aminogruppen enthaltenden Acrylatharz als wesentlicher Bindemittelkomponente,
   B) einem Polyisocyanat mit mindestens 2 Isocyanatgruppen pro Molekül als Vernetzungsmittel, wobei das Verhältnis der Isocyanatgruppen des Polyisocyanats zu den Hydroxylgruppen des Acrylatcopolymerisats im Bereich von 0,3 : 1 bis 3,5 : 1 liegt,
   C) einem oder mehreren organischen Lösemitteln,
   D) ggf. Pigmenten, Füllstoffen, üblichen Hilfsstoffen und Additiven,
   E) ggf. einem Katalysator für die Vernetzung,
   dadurch gekennzeichnet, daß das Acrylatharz A) dadurch hergestellt wird, daß
   I. ein hydroxylgruppenhaltiges Acrylatcopolymerisat (F) mit einer Säurezahl von 5 bis 30 mg KOH/g durch Copolymerisation von
   a) mindestens 10 Gew.-% Hydroxyalkylestern $\alpha,\beta$-ungesättigter Carbonsäuren und/oder einem Umsetzungsprodukt aus Acrylsäure und/oder Methacrylsäure mit dem Glycidylester einer Carbonsäure mit einem tertiären $\alpha$-Kohlenstoffatom oder anstelle des Umsetzungsproduktes aus Acryl- und/oder Methacrylsäure mit dem Glycidylester einer äquivalenten Menge Acryl- und/oder Methacrylsäure, wobei die Acryl- und/oder Methacrylsäure in diesem Fall während oder nach der Polymerisationsreaktion mit dem Glycidylester einer Carbonsäure mit einem tertiären $\alpha$-Kohlenstoffatom umgesetzt wird,
   b) 0,1 bis 8 Gew-% ethylenisch ungesättigten Carbonsäuren und
   c) mindestens 60 Gew.% weiteren Monomeren mit einer polymerisierbaren, olefinisch ungesättigten Doppelbindung
   in einem organischen Lösemittel unter Zusatz von Polymerisationsinitiatoren aufgebaut wird, wobei die Summe von a), b) und c) 100 Gew.-% beträgt, und daß
   II. das hydroxylgruppenhaltige Acrylatcopolymerisat (F) mit Verbindungen (G) umgesetzt wird, die pro Molekül durchschnittlich 0,8 bis 1,5 freie Isocyanatgruppen und mindestens 1 tertiäre Aminogruppe enthalten, wobei die Menge dieser Verbindungen (G) so gewählt wird, daß das entstehende Acrylatharz (A) eine Aminzahl von 1 bis 10 mg KOH/g aufweist und wobei das Acrylatharz A) mittlere Molekulargewichte ($\overline{M}_n$) von 1.000 bis 10.000 aufweist.

2. Überzugsmittel nach Anspruch 1, dadurch gekennzeichnet, daß das hydroxylgruppenhaltige Acrylatcopolymerisat (F) eine Säurezahl von 8 bis 25 mg KOH/g aufweist und/oder die Komponente I.a) in einer Menge von 15 bis 35 Gew.-% und/oder die Komponente I.b) in einer Menge von 0,5 bis 4 Gew.-% eingesetzt wird.

3. Überzugsmittel nach Anspruch 1 oder 2, dadurch gekennzeichnet, daß das Acrylatharz A) eine Aminzahl von 1 bis 5 mg KOH/g aufweist und/oder hergestellt wird durch Umsetzen des hydroxylgruppenhaltigen Acrylatcopolymerisats (F) mit Verbindungen (G), die pro Molekül durchschnittlich 1 freie Isocyanatgruppe und mindestens 1 tertiäre Aminogruppe enthalten.

4. Überzugsmittel nach einem der Ansprüche 1 bis 3, dadurch gekennzeichnet, daß zur Herstellung der Verbindung (G) Diisocyanate mit unterschiedlich reaktiven Isocyanatgruppen eingesetzt werden.

5. Überzugsmittel nach einem der Ansprüche 1 bis 4, dadurch gekennzeichnet, daß die Komponente I.a) zumindest teilweise ein Umsetzungsprodukt aus einem Mol Hydroxyethylacrylat und/oder Hydroxyethylmethacrylat und durchschnittlich 2 Mol $\epsilon$-Caprolacton ist.

6. Überzugsmittel nach einem der Ansprüche 1 bis 5, dadurch gekennzeichnet, daß das Überzugsmittel bis zu 15 Gew.-%, bezogen auf das Gewicht des Überzugsmittels, an einem oder mehreren tertiären Monoalkoholen enthält.

7. Verfahren zur Herstellung von Überzugsmitteln, bestehend aus:

A) einem Hydroxyl-, Carboxyl- und tertiäre Aminogruppen enthaltenden Acrylatharz als wesentlicher Bindemittelkomponente,

B) einem Polyisocyanat mit mindestens 2 Isocyanatgruppen pro Molekül als Vernetzungsmittel, wobei das Verhältnis der Isocyanatgruppen des Polyisocyanats zu den Hydroxylgruppen des Acrylatcopolymerisats im Bereich von 0,3 : 1 bis 3,5 : 1 liegt,

C) einem oder mehreren organischen Lösemitteln,

D) ggf. Pigmenten, Füllstoffen, üblichen Hilfsstoffen und Additiven,

E) ggf. einem Katalysator für die Vernetzung,

dadurch gekennzeichnet, daß das Acrylatharz A) dadurch hergestellt wird, daß

I. ein hydroxylgruppenhaltiges Acrylatcopolymerisat (F) mit einer Säurezahl von 5 bis 30 mg KOH/g durch Copolymerisation von

a) mindestens 10 Gew.-% Hydroxyalkylestern $\alpha,\beta$-ungesättigter Carbonsäuren und/oder einem Umsetzungsprodukt aus Acrylsäure und/oder Methacrylsäure mit dem Glycidylester einer Carbonsäure mit einem tertiären $\alpha$-Kohlenstoffatom oder anstelle des Umsetzungsproduktes aus Acryl- und/oder Methacrylsäure mit dem Glycidylester einer äquivalenten Menge Acryl- und/oder Methacrylsäure, wobei die Acryl- und/oder Methacrylsäure in diesem Fall während oder nach der Polymerisationsreaktion mit dem Glycidylester einer Carbonsäure mit einem tertiären $\alpha$-Kohlenstoffatom umgesetzt wird,

b) 0,1 bis 8 Gew.-% ethylenisch ungesättigten Carbonsäuren und

c) mindestens 60 Gew.-% weiteren Monomeren mit einer polymerisierbaren, oelfinisch ungesättigten Doppelbindung

in einem organischen Lösemittel unter Zusatz von Polymerisationsinitiatoren aufgebaut wird, wobei die Summe von a), b) und c) 100 Gew.-% beträgt, und daß

II. das hydroxylgruppenhaltige Acrylatcopolymerisat (F) mit Verbindungen (G) umgesetzt wird, die pro Molekül durchschnittlich 0,8 bis 1,5 freie Isocyanatgruppen und mindestens 1 tertiäre Aminogruppe enthalten, wobei die Menge dieser Verbindungen (G) so gewählt wird, daß das entstehende Acrylatharz (A) eine Aminzahl von 1 bis 10 mg KOH/g aufweist und wobei das Acrylatharz A) mittlere Molekulargewichte ($\overline{M}_n$) von 1.000 bus 10.000 aufweist.

8. Verfahren nach Anspruch 7, dadurch gekennzeichnet, daß das hydroxylgruppenhaltige Acrylatcopolymerisat (F) eine Säurezahl von 8 bis 25 mg KOH/g aufweist und/oder die Komponente I.a) in einer Menge von 15 bis 35 Gew.-% und/oder die Komponente I.b) in einer Menge von 0,5 bis 4 Gew.-% eingesetzt wird.

9. Verfahren nach Anspruch 7 oder 8, dadurch gekennzeichnet, daß das Acrylatharz A) eine Aminzahl von 1 bis 5 mg KOH/g aufweist und/oder hergestellt wird durch Umsetzen des hydroxylgruppenhaltigen Acrylatcopolymerisats (F) mit Verbindungen (G), die pro Molekül durchschnittlich 1 freie Isocyanatgruppe und mindestens 1 tertiäre Aminogruppe enthalten.

10. Verfahren nach einem der Ansprüche 7 bis 9, dadurch gekennzeichnet, daß zur Herstellung der Verbindung (G) Diisocyanate mit unterschiedlich reaktiven Isocyanatgruppen eingesetzt werden.

11. Verfahren nach einem der Ansprüche 7 bis 10, dadurch gekennzeichnet, daß die Komponente I.a) zumindest teilweise ein Umsetzungsprodukt aus einem Mol Hydroxyethylacrylat und/oder Hydroxyethylmethacrylat und durchschnittlich 2 Mol $\epsilon$-Caprolacton ist.

12. Verfahren nach einem der Ansprüche 7 bis 11, dadurch gekennzeichnet, daß das Überzugsmittel bis zu 15 Gew.-%, bezogen auf das Gewicht des Überzugsmittels, an einem oder mehreren tertiären Monoalkoholen enthält.

13. Verfahren zur Herstellung eines Überzuges, bei dem ein Überzugsmittel nach einem der Ansprüche 1 bis 6 durch Spritzen, Fluten, Tauchen, Walzen, Rakeln oder Streichen auf ein Substrat in Form eines Films aufgebracht wird und der Film bei Temperaturen bis etwa 100°C zu einem festhaftenden Überzug gehärtet wird.

14. Verwendung der Überzugsmittel nach einem der Ansprüche 1 bis 6 für die Autoreparaturlackierung.

**15.** Verwendung der Überzugsmittel nach einem der Ansprüche 1 bis 6 als Klarlack auf einem Basislack für metallpigmentierte Zweischichtlackierungen nach dem Naß-in-Naß-Verfahren.

**Claims**

**1.** Coating composition consisting of

A) an acrylate resin containing hydroxyl, carboxyl and tertiary amino groups as the essential binder component,

B) a polyisocyanate containing at least 2 isocyanate groups per molecule as crosslinking agent, the ratio of the isocyanate groups of the polyisocyanate to the hydroxyl groups of the acrylate copolymer being in the range of 0.3 : 1 to 3.5 : 1,

C) one or more organic solvents,

D) optionally, pigments, fillers, customary auxiliary substances and additives and

E) optionally, a catalyst for the crosslinking,

characterised in that the acrylate resin A) is prepared

I. by synthesising a hydroxyl-containing acrylate copolymer (F) having an acid value of 5 to 30 mg of KOH/g by the copolymerisation of

a) at least 10 % by weight of hydroxyalkyl esters of $\alpha,\beta$-unsaturated carboxylic acids and/or of a reaction product of acrylic and/or methacrylic acid with the glycidyl ester of a carboxylic acid containing a tertiary $\alpha$-carbon atom or instead of the reaction product of acrylic and/or methacrylic acid with the glycidyl ester of an equivalent amount of acrylic and/or methacrylic acid, in which case the acrylic and/or methacrylic acid is reacted during or after the polymerisation reaction with the glycidyl ester of a carboxylic acid containing a tertiary $\alpha$-carbon atom,

b) 0.1 to 8 % by weight of ethylenically unsaturated carboxylic acids and

c) at least 60 % by weight of other monomers containing a polymerisable, olefinically unsaturated double bond

in an organic solvent with the addition of polymerisation initiators, the sum of a), b) and c) being 100 % by weight, and

II. by reacting the hydroxyl-containing acrylate copolymer (F) with compounds (G) which contain on average 0.8 to 1.5 free isocyanate groups and at least 1 tertiary amino group per molecule, the amount of these compounds (G) being chosen so that the resultant acrylate resin (A) has an amine value of 1 to 10 mg of KOH/g and the acrylate resin A) has average molecular weights ($\overline{M}_n$) of 1,000 to 10,000.

**2.** Coating composition according to Claim 1, characterised in that the hydroxyl-containing acrylate copolymer (F) has an acid value of 8 to 25 mg of KOH/g and/or the component I.a) is used in an amount of 15 to 35 % by weight and/or the component I.b) is used in an amount of 0.5 to 4 % by weight.

**3.** Coating composition according to Claim 1 or 2, characterised in that the acrylate resin A) has an amine value of 1 to 5 mg of KOH/g and/or is prepared by reacting the hydroxyl-containing acrylate copolymer (F) with compounds (G) which contain on average 1 free isocyanate group and at least 1 tertiary amino group per molecule.

**4.** Coating composition according to any one of Claims 1 to 3, characterised in that diisocyanates containing isocyanate groups of different reactivities are used for the preparation of the compound (G).

**5.** Coating composition according to any one of Claims 1 to 4, characterised in that the component I.a) is at least partially a reaction product of one mole of hydroxyethyl acrylate and/or hydroxyethyl methacrylate with on average 2 mol of $\epsilon$-caprolactone.

**6.** Coating composition according to any one of Claims 1 to 5, characterised in that the coating composition contains up to 15 % by weight, based on the weight of the coating composition, of one or more tertiary monoalcohols.

**7.** Process for the preparation of coating compositions consisting of:

A) an acrylate resin containing hydroxyl, carboxyl and tertiary amino groups as the essential binder component,

B) a polyisocyanate containing at least 2 isocyanate groups per molecule as crosslinking agent, the ratio of the isocyanate groups of the polyisocyanate to the hydroxyl groups of the acrylate copolymer being in the range of 0.3 : 1 to 3.5 : 1,

C) one or more organic solvents,

D) optionally, pigments, fillers, customary auxiliary substances and additives and

E) optionally, a catalyst for the crosslinking,

characterised in that the acrylate resin A) is prepared

I. by synthesising a hydroxyl-containing acrylate copolymer (F) having an acid value of 5 to 30 mg of KOH/g by the copolymerisation of

a) at least 10 % by weight of hydroxyalkyl esters of $\alpha,\beta$-unsaturated carboxylic acids and/or of a reaction product of acrylic and/or methacrylic acid with the glycidyl ester of a carboxylic acid containing a tertiary $\alpha$-carbon atom or instead of the reaction product of acrylic and/or methacrylic acid with the glycidyl ester of an equivalent amount of acrylic and/or methacrylic acid, in which case the acrylic and/or methacrylic acid is reacted during or after the polymerisation reaction with the glycidyl ester of a carboxylic acid containing a tertiary $\alpha$-carbon atom,

b) 0.1 to 8 % by weight of ethylenically unsaturated carboxylic acids and

c) at least 60 % by weight of other monomers containing a polymerisable, olefinically unsaturated double bond

in an organic solvent with the addition of polymerisation initiators, the sum of a), b) and c) being 100 % by weight, and

II. by reacting the hydroxyl-containing acrylate copolymer (F) with compounds (G) which contain on average 0.8 to 1.5 free isocyanate groups and at least 1 tertiary amino group per molecule, the amount of these compounds (G) being chosen so that the resultant acrylate resin (A) has an amine value of 1 to 10 mg of KOH/g and the acrylate resin A) has average molecular weights ($\overline{M}_n$) of 1,000 to 10,000.

8. Process according to Claim 7, characterised in that the hydroxyl-containing acrylate copolymer (F) has an acid value of 8 to 25 mg of KOH/g and/or the component I.a) is used in an amount of 15 to 35 % by weight and/or the component I.b) is used in an amount of 0.5 to 4 % by weight.

9. Process according to Claim 7 or 8, characterised in that the acrylate resin A) has an amine value of 1 to 5 mg of KOH/g and/or is prepared by reacting the hydroxyl-containing acrylate copolymer (F) with compounds (G) which contain on average 1 free isocyanate group and at least 1 tertiary amino group per molecule.

10. Process according to any one of Claims 7 to 9, characterised in that diisocyanates containing isocyanate groups of different reactivities are used for the preparation of the compound (G).

11. Process according to any one of Claims 7 to 10, characterised in that the component I.a) is at least partially a reaction product of one mole of hydroxyethyl acrylate and/or hydroxyethyl methacrylate with on average 2 mol of $\epsilon$-caprolactone.

12. Process according to any one of Claims 7 to 11, characterised in that the coating composition contains up to 15 % by weight, based on the weight of the coating composition, of one or more tertiary monoalcohols.

13. Process for the preparation of a coating in which a coating composition according to any one of Claims 1 to 6 is applied by spraying, flow coating, dipping, rolling, blade-coating or brushing to a substrate in the form of a film and the film is cured at temperatures up to about 100°C to yield a strongly adhering coating.

14. Use of the coating compositions according to any one of Claims 1 to 6 for automotive refinishing.

15. Use of the coating compositions according to any one of Claims 1 to 6 as a clearcoat over a basecoat for metal-pigmented two-coat finishes by the wet-on-wet process.

**Revendications**

1. Agent de revêtement, se composant de :

(A) une résine d'acrylate contenant des groupes hydroxyle, carboxyle et amino tertiaires, en tant que composant essentiel de liant ;

(B) un polyisocyanate présentant au moins 2 groupes isocyanate par molécule, en tant qu'agent réticulant, le rapport des groupes isocyanate du polyisocyanate aux groupes hydroxyle du copolymère d'acrylate se situant dans la plage de 0,3 : 1 à 3,5 : 1 ;

(C) un ou plusieurs solvants organiques ;

(D) le cas échéant, des pigments, des charges, des adjuvants et additifs usuels ;

(E) le cas échéant, un catalyseur pour la réticulation ;

caractérisé par le fait que la résine d'acrylate (A) est préparée

(I) en synthétisant, dans un solvant organique, avec addition d'initiateurs de polymérisation, un copolymère d'acrylate (F), contenant des groupes hydroxyle et présentant un indice d'acide de 5 à 30 mg KOH/g, par copolymérisation de

(a) au moins 10% en poids d'esters hydroxyalkyliques d'acides carboxyliques à insaturation $\alpha,\beta$ et/ou un produit de réaction d'acide acrylique et/ou d'acide méthacrylique avec l'ester glycidylique d'un acide carboxylique présentant un atome de carbone en $\alpha$ tertiaire, ou, à la place du produit de réaction de l'acide acrylique et/ou méthacrylique avec l'ester glycidylique, une quantité équivalente d'acide acrylique et/ou méthacrylique, l'acide acrylique et/ou méthacrylique étant, dans ce cas, mis à réagir pendant ou après la réaction de polymérisation avec l'ester glycidylique d'un acide carboxylique présentant un atome de carbone en a tertiaire ;

(b) 0,1 à 8% en poids d'acides carboxyliques à insaturation éthylénique ; et

(c) au moins 60% en poids d'autres monomères présentant une double liaison d'insaturation oléfinique, polymérisable ;

la somme de (a), (b) et (c) s'élevant à 100% en poids ; et

(II) en faisant réagir le copolymère d'acrylate (F), contenant des groupes hydroxyle, avec des composés (G) qui contiennent, par molécule, en moyenne 0,8 à 1,5 groupe isocyanate libre et au moins 1 groupe amino tertiaire, la quantité de ces composés (G) étant choisie de telle sorte que la résine d'acrylate (A) qui se forme présente un indice d'amine de 1 à 10 mg KOH/g, et la résine d'acrylate (A) présentant des masses moléculaires moyennes ($\overline{M}_n$) de 1000 à 10 000.

2. Agent de revêtement selon la revendication 1, caractérisé par le fait que le copolymère d'acrylate (F), contenant des groupes hydroxyle, présente un indice d'acide de 8 à 25 mg KOH/g, et/ou le composant (I.a) est utilisé dans une quantité de 15 à 35% en poids et/ou le composant (I.b), dans une quantité de 0,5 à 4% en poids.

3. Agent de revêtement selon l'une des revendications 1 ou 2, caractérisé par le fait que la résine d'acrylate (A) présente un indice d'amine de 1 à 5 mg KOH/g, et/ou est préparée par réaction du copolymère d'acrylate (F) contenant des groupes hydroxyle, avec des composés (G), qui contiennent, par molécule, en moyenne 1 groupe isocyanate libre et au moins 1 groupe amino tertiaire.

4. Agent de revêtement selon l'une des revendications 1 à 3, caractérisé par le fait que, pour la préparation du composé (G), sont utilisés des diisocyanates présentant des groupes isocyanate de différentes réactivités.

5. Agent de revêtement selon l'une quelconque des revendications 1 à 4, caractérisé par le fait que le composant (I.a) est au moins en partie un produit de réaction d'une mode d'acrylate d'hydroxyéthyle et/ou de méthacrylate d'hydroxyéthyle et, en moyenne, 2 modes d'$\epsilon$-caprolactone.

6. Agent de revêtement selon l'une quelconque des revendications 1 à 5, caractérisé par de fait que l'agent de revêtement contient jusqu'à 15% en poids, par rapport au poids de l'agent de revêtement, d'un ou plusieurs monoalcools tertiaires.

7. Procédé de préparation d'agents de revêtement, se composant de :

(A) une résine d'acrylate contenant des groupes hydroxyle, carboxyle et amino tertiaires, en tant que composant essentiel de liant ;

(B) un polyisocyanate présentant au moins 2 groupes isocyanate par molécule, en tant qu'agent réticulant, le rapport des groupes isocyanate du polyisocyanate aux groupes hydroxyle du copolymère d'acrylate se situant dans la plage de 0,3 : 1 à 3,5 : 1 ;

14

(C) un ou plusieurs solvants organiques ;

(D) le cas échéant, des pigments, des charges, des adjuvants et additifs usuels ;

(E) le cas échéant, un catalyseur pour la réticulation ;

caractérisé par le fait que la résine d'acrylate (A) est préparée

(I) en synthétisant, dans un solvant organique, avec addition d'initiateurs de polymérisation, un copolymère d'acrylate (F), contenant des groupes hydroxyle et présentant un indice d'acide de 5 à 30 mg KOH/g, par copolymérisation de

(a) au moins 10% en poids d'esters hydroxyalkyliques d'acides carboxyliques à insaturation $\alpha,\beta$ et/ou un produit de réaction d'acide acrylique et/ou d'acide méthacrylique avec l'ester glycidylique d'un acide carboxylique présentant un atome de carbone en $\alpha$ tertiaire, ou, à la place du produit de réaction de l'acide acrylique et/ou méthacrylique avec l'ester glycidylique, une quantité équivalente d'acide acrylique et/ou méthacrylique, l'acide acrylique et/ou méthacrylique étant, dans ce cas, mis à réagir pendant ou après la réaction de polymérisation avec l'ester glycidylique d'un acide carboxylique présentant un atome de carbone en a tertiaire ;

(b) 0,1 à 8% en poids d'acides carboxyliques à insaturation éthylénique ; et

(c) au moins 60% en poids d'autres monomères présentant une double liaison d'insaturation oléfinique, polymérisable ;

la somme de (a), (b) et (c) s'élevant à 100% en poids ; et

(II) en faisant réagir le copolymère d'acrylate (F) contenant des groupes hydroxyle, avec des composés (G) qui contiennent, par molécule, en moyenne 0,8 à 1,5 groupe isocyanate libre et au moins 1 groupe amino tertiaire, la quantité de ces composés (G) étant choisie de telle sorte que la résine d'acrylate (A) qui se forme présente un indice d'amine de 1 à 10 mg KOH/g, et la résine d'acrylate (A) présentant des masses moléculaires moyennes ($\overline{M}_n$) de 1000 à 10 000.

8. Procédé selon la revendication 7, caractérisé par le fait que le copolymère d'acrylate (F), contenant des groupes hydroxyle, présente un indice d'acide de 8 à 25 mg KOH/g et/ou le composant (I.a) est utilisé dans une quantité de 15 à 35% en poids et/ou le composant (I.b), dans une quantité de 0,5 à 4% en poids.

9. Procédé selon l'une quelconque des revendications 7 ou 8, caractérisé par le fait que la résine d'acrylate (A) présente un indice d'amine de 1 à 5 mg KOH/g, et/ou est préparée par réaction du copolymère d'acrylate (F) contenant des groupes hydroxyle, avec des composés (G), qui contiennent, par molécule, en moyenne 1 groupe isocyanate libre et au moins 1 groupe amino tertiaire.

10. Procédé selon l'une quelconque des revendications 7 à 9, caractérisé par le fait que, pour la préparation du composé (G), sont utilisés des diisocyanates présentant des groupes isocyanate de différentes réactivités.

11. Procédé selon l'une quelconque des revendications 7 à 10, caractérisé par le fait que le composant (I.a) est au moins en partie un produit de réaction d'une mole d'acrylate d'hydroxyéthyle et/ou de méthacrylate d'hydroxyéthyle et, en moyenne, 2 moles d'$\epsilon$-caprolactone.

12. Procédé selon l'une quelconque des revendications 7 à 11, caractérisé par le fait que l'agent de revêtement contient jusqu'à 15% en poids, par rapport au poids de l'agent de revêtement, d'un ou plusieurs monoalcools tertiaires.

13. Procédé de fabrication d'un revêtement, suivant lequel on applique un agent de revêtement tel que défini à l'une quelconque des revendications 1 à 6, par pulvérisation, coulée, immersion, laminage, raclage ou peinture, sur un substrat se présentant sous la forme d'un film, et on fait durcir le film à des températures allant jusqu'à environ 100° C pour obtenir un revêtement adhérent.

14. Utilisation de l'agent de revêtement tel que défini à l'une des revendications 1 à 6 pour le laquage de réparation des automobiles.

15. Utilisation de l'agent de revêtement tel que défini à l'une quelconque des revendications 1 à 6 comme laque transparente sur une laque de base pour des laquages à deux couches, à pigmentation métallique, selon le procédé au mouillé-sur-mouillé.